# EUROPÄISCHE PATENTSCHRIFT

(11) **EP 1 662 051 B1**
(45) Veröffentlichungstag und Bekanntmachung des Hinweises auf die Patenterteilung: **19.08.2015**
(21) Anmeldenummer: 05110882.7
(22) Anmeldetag: 17.11.2005
(51) Int. Cl.: E02D 29/12, E03F 5/02

(54) **Verfahren zum Verbinden eines öffentlichen Verteilerschachtes mit einem Hausanschluss**
Method of connecting municipal manhole with supply mains to buildung supply
Procédé de raccorder puit de conduits d'alimentation municipale avec les conduits d'alimentation de batiment

(30) Priorität: 28.11.2004 DE 202004018430 U
(43) Veröffentlichungstag der Anmeldung: 31.05.2006
(73) Patentinhaber: Würmseher, Hans, Dipl.-Ing., 94009 Ruhstorf (DE)
(72) Erfinder: Würmseher, Hans, Dipl.-Ing., 94009 Ruhstorf (DE)
(74) Vertreter: Faul, Claus-Peter

(56) Entgegenhaltungen:
- CH-A5- 589 247
- DE-A1- 10 023 399
- DE-U1- 20 112 443
- GB-A- 2 391 245

## Beschreibung

Die vorliegende Erfindung betrifft ein Verfahren zum Verbinden eines Verteilerschachtes mit einem Hausanschluss, wobei sich der Verteilerschacht im öffentlichen Bereich und der Hausanschluss im ausschließlich nichtöffentlichen, also privaten Bereich befindet. Die Erfindung geht dabei im Oberbegriff des Patentanspruchs 1 aus von DE 100 23 399.

Hausanschlussschächte die vor den privaten Grundstücken liegen und die zwei bis vier Hausanschlüsse im öffentlichen Straßenbereich zusammenfassen, sind bereits früher vom Anmelder vorgeschlagen worden. Es gibt auch Vorschläge, derartige vorgefertigte Schächte mit zum Teil vorgefertigten Einbauteilen zu verbessern, um die Vielfalt der im öffentlichen Bereich verlegten Leitungen zu reduzieren und Revisionsarbeiten zu erleichtern.

So wird in der eigenen DE 100 23 399 ein Erschließungs-, Revisions- und Verteilerschacht mit Hausanschluss - Winkelplatte beschrieben. Hierbei wird davon ausgegangen, dass sämtliche Ver- und Entsorgungsleitungen sowie deren Anschlüsse bisher im Straßen- und Gehsteigkörper nach Höhe und Lage versetzt verlegt wurden. Bei Reparaturen an den Leitungen oder der Herstellung neuer Anschlüsse muss jedes Mal der Straßen- und Gehsteigkörper geöffnet werden. Durch den bekannten Erschließungs, Revisions- und Verteilerschacht mit Hausanschluss - Winkelplatte werden alle Ver- und Entsorgungsleitungen im Gehsteigbereich in einem Graben gebündelt und durch den Schacht geführt. Im Schacht sind sämtliche Anschlüsse, Verbindungsstellen und Schieber frei zugänglich, so dass Reparaturen und die Herstellung neuer Anschlüsse im Schacht vorgenommen werden können. Der Einsatz dieses Erschließungs-, Revisions- und Verteilerschachtes mit Hausanschluss - Winkelplatte empfiehlt sich besonders bei der Erschließung neuer Baugebiete.

Eine weitere schon bekannte Verbesserung ist der ebenfalls eigenen DE 102 33 981 zu entnehmen.

Es besteht aber die Aufgabe, nicht nur bei der Erschließung neuer Baugebiete von der herkömmlichen Technik bei Hausanschlüssen abzukommen, sondern auch bestehende kommunale Hausanschlüsse zu sanieren und dabei die Zugänglichkeit im Schacht und das Arbeiten im Schacht bei Revisionen oder für nachträgliche Anschlüsse aller Art, seien es die Wasser- oder Abwasseranschlüsse, die Energieanschlüsse wie Gas oder Strom oder die Verteilung von Kommunikatkonskabeln, zu verbessern.

Für die Lösung dieser Aufgabe werden folgende Kriterien beachtet:
In einer vorausgehenden eigenen Anmeldung (DE 203 19 998 U1) ist ein kombinierter Straßenablauf und Hausanschluss beschrieben, der mit der vorliegenden Erfindung in einer besonderen Hinsicht ergänzt und verbessert wird. Es wird in diesem Sinne von einem Revisionsschacht ausgegangen, in dem solche Hausanschlüse im öffentlichen Bereich vorteilhafterweise an einer Stelle zusammenlaufen, an der mehrere benachbarte Grundstücke an einem Ort angeschlossen werden können, während auf den Grundstücken gemäß ebenfalls vorausgehender eigener Anmeldungen (DE 100 23 399 A1 oder DE 299 08 863 U1) eigene, zusätzliche Revisionsschächte entfallen können.

Für diese Sonderlösung besteht die Aufgabe, die jeweilige Abwasserzuleitung im Bedarfsfalle vom betreffenden nächstliegenden Schacht im öffentlichen Bereich sowohl für den öffentlichen als auch für den privaten Bereich revidieren zu können.

Alle Hauptleitungen und Hausanschlussabgänge sind in einem Schacht zugänglich, wobei ein Schacht für mehrere Hausanschlüsse vorgesehen wird, der vorzugsweise nur auf einer Straßenseite anzulegen ist. Der Schacht ist so ausgelegt, dass keine weiteren Hausanschlussschächte beispielsweise für den Kanal im privaten Grundstücksbereich notwendig sind. Alle früher von diesen, nur auf privatem Grund zugänglichen Revisionsarbeiten sind nun vom öffentlich zugänglichen Schacht möglich. Dennoch ist es möglich, eine Nähe vom Schacht zum Hausanschlussraum zu suchen. Für diese Anbindung ist vom Schacht nur ein Graben (80 cm breit) für alle Hausanschlussleitungen möglichst schon beim Baugrubenaushub herzustellen. Bei Neubauten sollten "abstandsnahe" Hauseinführungen gemäß dem vorliegenden System aus KG-Schiebemuffen oder "Mastertec" - Doppelmuffen in die Kelleraußenwand -wasserdicht- einbetoniert werden. Bei Strom, Telekom + Kabel -TV und Wasser sind innen aufgesteckte Reduzierungen 100/50 mm vorzusehen.

Beim Gasanschluss sind innen Styropor-Aussparung 100/100 mm - 150 mm tief und flexible Kabelleerrohre 20 mm mit Mauerbuchse für einen Bowdenzug - Notverschluss einzubauen. Die Kanalleitungen (DN 150) sowie Versorger-Leerrohre (KG/DN 100) sind von der Anschlussmuffe am Schacht bzw. von der Winkelplatte bis zum Hausanschlussraum einzubauen. Leitungsabknickungen sind mit Bögen von max. 15° und 50 cm langem Zwischenstück herzustellen. Eingebaute Leerrohre Gas/Wasser sind vor einer Verfüllung zur Abnahme und Einmessung den Versorgern zu melden.

Alle Versorgerleitungen und Kabel werden erst bei Bedarf in die Leerrohre vom außen liegenden Schacht bis in den Hausanschlussraum eingezogen. Spätere Auswechslungen, Ergänzungen oder Reparaturen sind ohne Aufgrabungen möglich.

Die erfindungsmäße Lösung ergibt sich aus dem Hauptanspruch und wird in den Unteransprüchen ergänzt, sowie an Hand der Zeichnung im Folgenden näher erläutert. In der Zeichnung von bevorzugten Ausführungsformern zeigen:
- Figur 1: einen schematischen Vertikalschnitt durch das erfindungsgemäße System über die Breite zweier sich gegenüberliegender Häuserzeilen auf ihrem privaten Grund mit dem dazwischen liegenden öffentlichen Bereich,
- Figur 2: einen synoptischen Horizontalschnitt zu Figur 1,
- Figuren 3a bis 3d: hausanschlussseitige Einzelheiten,
- Figuren 4a und 4b: Einzelheiten des Schachtes 10,
- Figur 5: eine schematische Perspektive des Bodens eines Schachtes 10 mit den darin verlegten Abwasserleitungen,
- Figuren 6a bis 6c: Einzelheiten der Ab- und Verzweigungen,
- Figur 7: im schematischen Grundriss eine Durch- und Zu- sowie Ableitung eines Abwasserkanals und
- Figur 8: ein Detail zu Figur 7.

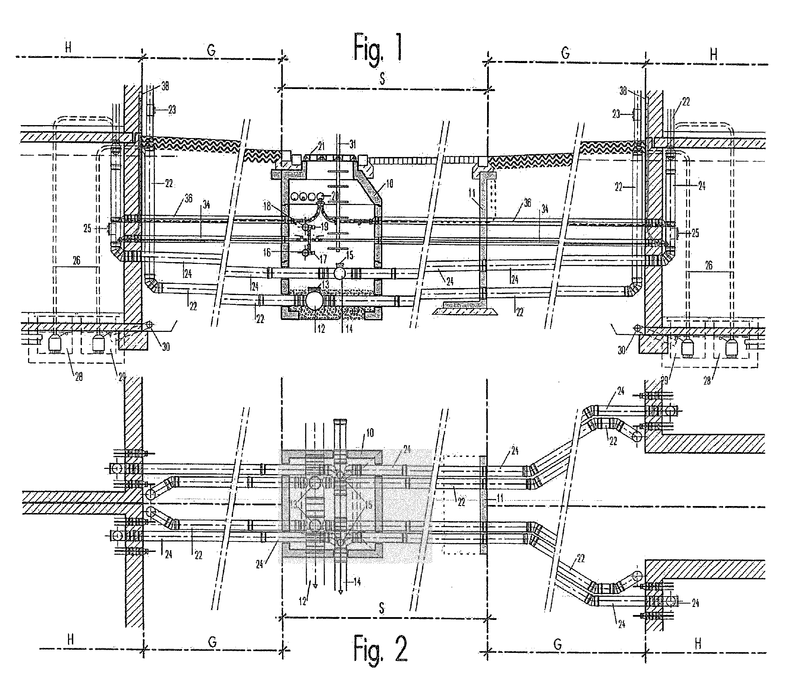

Mit den Figuren 1 und 2 lässt sich rein schematisch das Prinzip einer Trennung zwischen einem für mehrere Häuser dienenden und im öffentlichen Bereich "S" angeordneten Verteiler-, Anschluss- und Revisonsschacht 10 und alle über private Grundstücke "G" führenden Zu- und Ableitungen zu im vorliegenden Beispiel vier versorgten und entsorgten Häusern "H" verdeutlichen.

Im linken Teil der beiden Darstellungen der Figuren 1 und 2 ist gezeigt, wie zwei unmittelbar benachbarte Häuser "H" ver- und entsorgt werden, während im rechten Teil der Darstellungen der Figuren 1 und 2 angedeutet ist, dass die beiden Häuser "H" getrennt voneinander errichtet sind.

Wie aus dem in den Figuren 1 und 2 dargestellten Beispiel ersichtlich, wird der Schacht 10 möglichst dicht an der Grenze zwischen öffentlichem Bereich "S" und der Grenze zum Grundstück "G", möglichst unterhalb des so genannten Bürgersteiges oder Gehweges angeordnet. Spätere von dort vorgenommene Revisionsarbeiten stören hier nicht den Verkehr auf der Fahrbahn. In der Praxis ist der der Schacht 10 ein hochkant stehender Quader oder ein Zylinder mit rundem oder mehreckigem Querschnitt. Außerdem kann Oberfächenwasser von einem am Straßenrand neben dem Schacht 10 angeordneten Gully leicht in einen an dieser Stelle angeordneten Schacht 10 abgeleitet werden, was hier der Übersichtlichkeit halber nicht eingezeichnet ist. Wesentlich ist jedoch ein an sich bekanntes Merkmal des Systems, dass der Schacht 10 nur auf einer Straßenseite von "S" angeordnet ist und dennoch die beiden Seiten der Straße "S" ver- und entsorgt. Für die Durchführung aller Zu- und Ableitungen von der gegenüberliegenden Straßenseite "S" auf die gegenüberliegenden Grundstücke "G" sorgt eine Hausanschlusswinkelplatte 11.

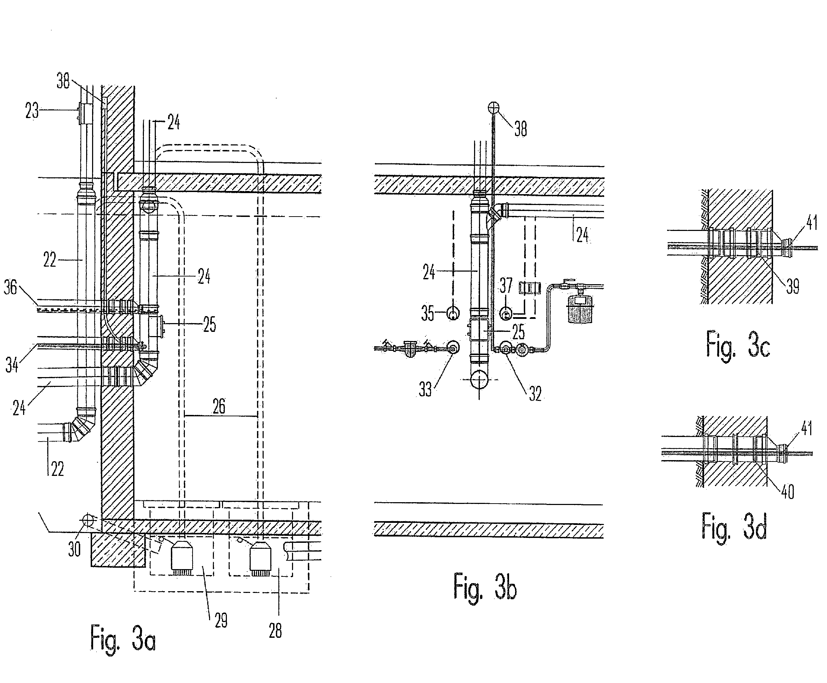

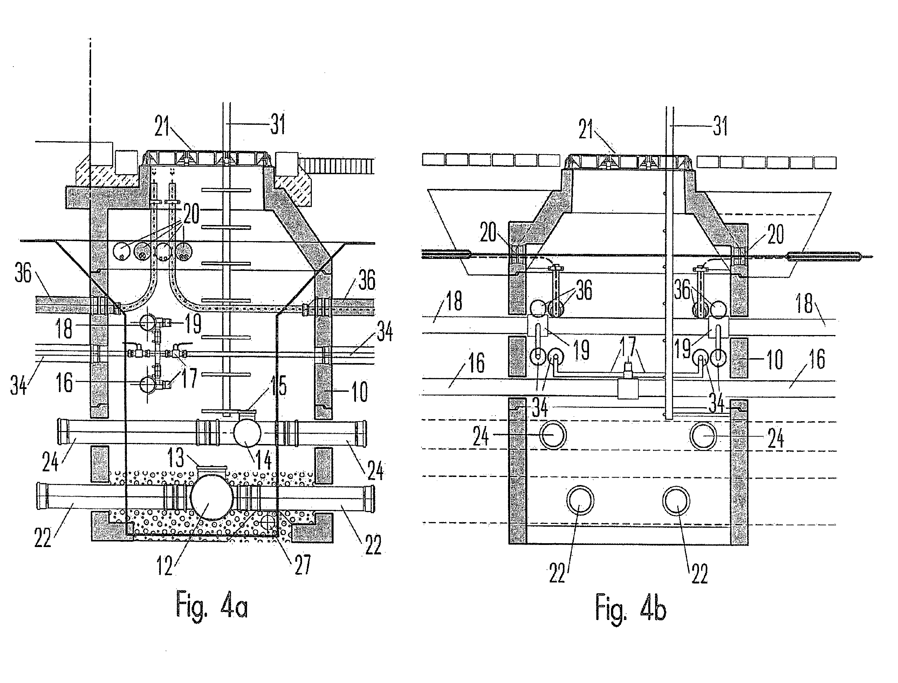

Einzelheiten der Ausbildung der hier beispielhaft verwendeten Schächte 10 sind den Figuren 4 zu entnehmen. Hierbei zeigt die Figur 4a einen schematischen Aufriss quer zum Verlauf der Straße im öffentlichen Bereich "S". Die Figur 4b zeigt einen schematischen Aufriss längs zum Verlauf der Straße im öffentlichen Bereich "S", also einen Schnitt im rechten Winkel zu Figur 4a. Die Einzelheiten zu den unten im Schacht 10 verlaufenden Abwasserleitungen 12 und 14 und ihren entsprechenden Zuleitungen 22 bzw. 24 werden nachstehend näher beschrieben, auch unter Bezugnahme auf die Darstellungen in den Figuren 4. Hier sei aber schon auf die unten angeordnete Drainage 27 für eine Rohrgrabenentwässerung hingewiesen. Oben sind einseitig unter nur einem Gehsteig verlegte Zu- und Ableitungen von Schacht zu Schacht 10 geführt, die mit einem Deckel 21 verschließbar und bei geöffnetem Deckel 21 über eine fest montierte Einstiegsleiter mit Einstiegshilfe 31 vollständig begehbar sind. Der Deckel 21 dient zu zwei Drittel dem Einstieg und einem Drittel für ein Kabelfach, wenn der Stromversorger einen überirdischen Kabelverteiler wünscht. Zu den anschließbaren Zuleitungen, die durch den Schacht 10 geführt werden, gehören eine öffentliche Wasserversorgungs-Hauptleitung 16 und eine Leitung 18 für eine Gas- oder Fernwärmezufuhr. Für die Wasserzuleitung zum Haus "H" ist ein Anbohrventil 17 für den Hausanschlussverteiler der Wasserversorgung vorgesehen. Für die Gaszuleitung zum Haus "H" sind eine Anbohrschelle 19 für den Hausanschlussverteiler der Gasversorgung und ein Gastopventil vorgesehen. Die vom Inneren des Schachtes 10 absperrbaren Zuleitungen für Wassser und Gas werden über auf dem Grundstück "G" vorverlegte Einzel- oder Parallelrohre 34 an die vier anschließbaren Häuser "H" geleitet und kommen, wie in Figur 3b in einer Darstellung gegen die Kellerwand von innen zu erkennen, in diesem Beispiel in zwei parallelen Öffnungen als Wasserzuleitung 33 in bekannter Weise und als Gaszuleitung durch eine Öffnung 32 an. Für die Gaszuleitung besteht jedoch erfindungsgemäß eine Notabsperrung, die im Notfall von außen am Haus "H" beispielsweise über einen Bowdenzug 38 beispielsweise von der Feuerwehr ausgelöst werden kann, ohne das Haus betreten zu müssen.

Die Schachteinführungen 20 leiten die Kabel für Strom, Telekommunikationsanschlüsse oder Kabelfernsehen wie Glasfaserkabel oder Breitbandkabel im herkömmlichen Sinn durch den Schacht 10 und sind aus dem Schacht oder von überirdisch aufgestellten Verteilerkästen mittels auf dem Grundstück "G" vorverlegter Einzel- oder Parallelrohre 36 an die vier anschließbaren Häuser "H" verteilbar. Wie wiederum Figur 3b zeigt, kommen die Starkstromkabel über eine Öffnung 35 und die anderen Anschlüsse über einen Parallelzugang 37 in das Haus "H". Die Starkstromleitung tritt entweder über eine bauseitige Abdichtung 41 gemäß Figur 3c über ein Norm PVC-Rohr 39 oder gemäß Figur 3d über ein Spezial PC- Rohr 40 durch die Hausmauer hindurch.

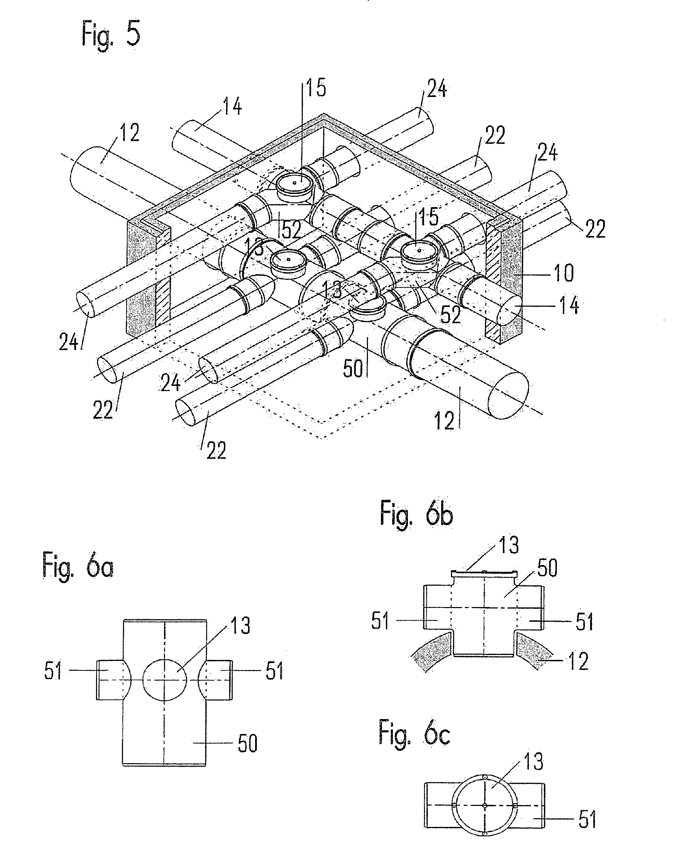

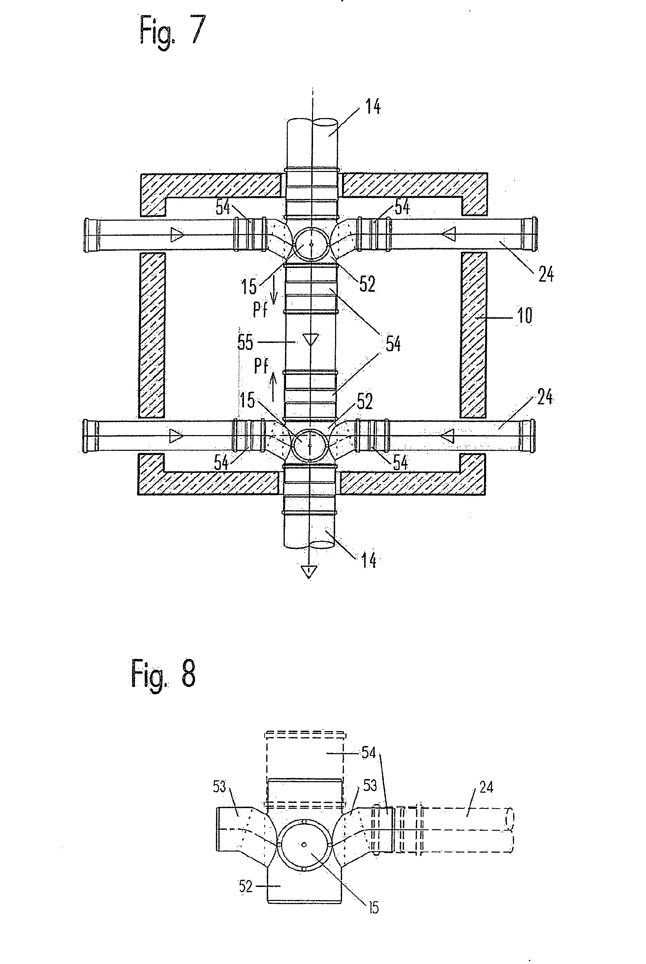

Wie deutlicher der Figur 5 zu entnehmen ist, befindet sich unten im Schacht 10 ein Hauptkanal 12 zur Regenwasserableitung, der aber auch als Mischwasserkanal (siehe Figur 7) ausgebildet sei kann. Im dargestellten Beispiel fließen von vier Häuser-Regenwasserleitungen 22 jeweils zu zweit in zwei Spezial-Doppelabzweigteile 50, die als vorgefertigte Teile (zumeist aus Kunststoff) in die Rohrleitung 12 eingeführt sind. Ein wesentliches Merkmal ist hierbei, dass die beiden Spezial-Doppelabzweigteile 50 die beiderseitigen Zuleitungen 22 direkt gegenüberliegend, also sozusagen im Gegenstrom aufnehmen. Dahinter steckt die Erkenntnis, dass bei Regen beide Seiten etwa gleiche Mengen aus den Zuleitungen 22 aufnehmen, die allein deshalb nicht in das gegenüberliegende Rohr 22 eintreten werden. Selbst wenn dieser Effekt kurzzeitig auftreten würde, kommt es sehr schnell zu einem Rückfluss. Außerdem stellt sich bei Regen im Rohr 12 eine starke abfließende Strömung ein, die das Wasser aus den Zuleitungen 22 in Richtung der Strömung umlenken. Man kann deshalb das Spezial-Doppelabzweigteil 50 gemäß Figur 6a konstruktiv einfach halten. Ein weiterer wesentlicher Vorteil wird mit dem Spezial-Doppelabzweigteil 50 dadurch erreicht, dass in seiner im Schacht 10 leicht zugänglichen oberen Mitte über dem Kreuzungspunkt der Wasserströme im Doppelabzweiteil 50 ein einziger verschließbarer Deckel 13 sich für Revisionsarbeiten in allen Richtungen öffnen lässt. Von dort lassen sich moderne Revisionsund Reinigungsgeräte in die Hauptleitung 12 ebenso einführen wie in die Hauszuleitungen 22. Damit ist es nicht mehr nötig, auf den Grundstücken "G" eigene Revisionsöffnungen vorzusehen, sondern man kann die Arbeiten von öffentlich zugänglicher Stelle bis biespielsweise in die Höhe vom Revisionsdeckel 23 (siehe Figur 3a) am Regenrinnenablauf vornehmen.

Für andere Formen, Größen oder Materialien der Hauptleitung 12 sind gemäß den Figuren 6b und 6c auf eine obere Öffnung im Rohr der Hauptleitung 12 aufsetzbare Ausführungsformen des Spezial-Doppelabzweigteils 50 als Abwandlung möglich.

Wieder zurück zur Figur 5, der zusätzlich zu entnehmen ist, dass unten im Schacht 10 außer einem Hauptkanal 12 zur Regenwasserableitung, der aber auch als Mischwasserkanal (siehe Figur 7) ausgebildet sei kann, in den meisten Fällen ein getrenntes System zur Ableitung des hauptsächlich von den Häusern "H" anfallenden Schmutzwassers mit einer getrennten Schmutzwasserableitung vorgesehen ist. Hierfür dient ein zusätzlich durch die Schächte 10 geführtes Schmutzwasserrohr 14 oder ein Schmutzwasserkanal 14. Im dargestellten Beispiel fließen vier Häuser-Schmutzwasserleitungen 24 jeweils zu zweit in zwei Spezial-Doppelabzweigteile 52, die als vorgefertigte Teile (zumeist aus Kunststoff) in die Rohrleitung 14 eingefügt sind. Im Gegensatz zu den beiden Spezial-Doppelabzweigteilen 50, die die beiderseitigen Zuleitungen 22 direkt gegenüberliegend aufnehmen, ist beim Schmutzwasseranfall nicht mit einem gleichmäßigen, sondern mit einem schwallförmigen, sehr unterschiedlichem Anfall von Schmutzwasser aus den Rohren 24 zu rechnen. Um hier ein Überströmen in ein gegenüberliegendes Rohr 24 zu vermeiden, wird der Zustrom jeweils über einen Krümmer 53 (siehe Figur 8) von den gegenüberliegenden Rohren 24 in den Schmutzwasserstrom der Schmutzwasserleitung 14 gelenkt, und zwar erfindungsgemäß derart, dass alle drei Strömungen unterhalb eines abnehmbaren Deckels 15 zusammenkommen. Damit wird ein weiterer wesentlicher Vorteil mit dem Spezial-Doppelabzweigteil 52 dadurch erreicht, dass in seiner im Schacht 10 leicht zugänglichen oberen Mitte über dem Kreuzungspunkt der Abwasserströme im Doppelabzweigteil 52 ein einziger verschließbarer Deckel 15 sich für Revisionsarbeiten in allen Richtungen öffnen lässt. Von dort lassen sich moderne Revisions- und Reinigungsgeräte in die Schmutzwasserleitung 14 ebenso einführen wie in die Hausschmutzwasserzuleitungen 24. Damit ist es auch für diese Arbeiten nicht mehr nötig, auf den Grundstücken "G" eigene Revisionsöffnungen vorzusehen, sondern man kann die Arbeiten von öffentlich zugänglicher Stelle bis beispielsweise in die Höhe eines Revisionsdeckels 25 (siehe Figur 3a) im Schmutzwasserablauf im Haus "H" vornehmen.

Gemäß Figur 3a wird das gesamte im Haus "H" anfallende Schmutzwasser in die Hausschmutzwasserzuleitung 24 geleitet. Von einem hausseitigen Innensumpf für Schmutzwasser 28 und einem hauseigenen Innensumpf für Kellerdrainagewasser 29, in den auch von außen sich vor der Hausisolierung sammelndes Wasser über eine Kellerdrainage 30 einfließt, wird über eingezeichnete, aber nicht bezeichnete Pumpen das tiefliegende Schmutzwasser über Leitungen 26 in die Hausschmutzwasserzuleitungen 24 angehoben und so abgeleitet.

In Figur 7 wird in Verbindung mit Figur 8, aber auch zum allgemeineren Verständnis für alle flüssigen Ableitungen, seien es Regenwasser, Schmutzwasser oder Mischwasser, dargestellt, dass die Erfindung durchaus auch die Möglichkeit für eine größere Revison dieser Ableitungen offen lässt, nämlich, wenn die verwendeten Rohrabschnitte oder Rohrverbindungen wie 50 oder 52 ausgewechselt werden müssen. In dem in Figur 7 dargestellten Beispiel stehen die Doppelabzweigteile 52 auch für andere Zuleitungsteile mit einzigem zentralem Revisionsdeckel 15. Sowohl die Zuleitungen 24 als auch die Hauptleitung 14 stehen im Schacht 10 mit dem zentralen Teil 52 und untereinander mit Schiebemuffen 54 in Verbindung, die sich auf ihre angrenzenden geraden Rohrleitungsteile 14, 24 oder 54 zurückschieben lassen, um alle Zu- und Abgänge im Schacht 10 freizulegen oder einen Austausch evtl. defekter Teile zuzulassen. Zum Teil sind die Schieberichtungen durch Pfeile Pf angedeutet. Die Durchlässe durch die Wände des Schachts 10 sind ferner so bemessen, dass eine Bewegung auch durch diese Wände möglich ist.

## Patentansprüche

1. Verfahren zum Verbinden eines öffentlichen Verteilerschachtes mit einem nichtöffentlichen Hausanschluss im privaten Bereich mit den folgenden Merkmale:
a. alle in den Verteilerschacht führenden Zuleitungen und aus diesem heraus führenden Ableitungen (12, 14, 16, 18, 20) für Abwasser (12, 14), Wasserversorgung (16) oder Fernwärme (18) sowie Strom und Telekommunikation (20) werden nahe nur einer Grenze zwischen öffentlichem (S) und anzuschließendem nichtöffentlichen Bereich (G, H) geführt, vorzugsweise unter einem Gehsteig, durch in Abständen zueinander angeordnete, vorgefertigte und von oben zugängliche Verteiler- und Revisonsschächte (10), wobei die Abstände zwischen den Verteiler- und Revisionsschächten (10), so gewählt sind, dass von jedem Verteiler- und Revisionsschacht (10) bis vier Häuser (H) ver- und entsorgt werden,
b. alle Zu- und Ableitungen (12, 14, 16, 18, 20) sind im nichtöffentlichen Bereich (G) durch vorverlegte Leerrohre vorbereitet,
c. auf der der Reihe von Schächten (10) gegenüberliegenden Straßenseite ist an der Grenze vom öffentlichen (S) zum nichtöffentlichen (G) Bereich eine Hausanschlusswinkelplatte (11) angeordnet, durch welche alle Zu- und Ableitungen (12, 14, 16, 18,20) geführt werden **dadurch gekennzeichnet, dass**
d. alle Flüssigkeits-Ableitungen für Regen-, Schmutz- oder Mischwasser aus Häuseren (H) aus gegenläufigen Zuleitungen (22, 24) derart in eine Hauptleitung (12, 14) geleitet werden, dass über einem zentralen Einlauf in einem Zusammenführungsteil (50, 52) ein verschließbarer Deckel (13, 15) angeordnet ist und von der darunter befindlichen Öffnung sowohl die Hauptleitungen (12, 14) als auch die Zuleitungen (22, 24) einer Revision unterzogen werden können, ohne dass weitere Revisionsschächte insbesondere im nichtöffentlichen Bereich (G) notwendig sind.

2. Verfahren nach Anspruch 1, **dadurch gekennzeichnet, dass** zur Überleitung der Regenwasserleitungen (22) in die Hauptleitung (12) für die Regenwasserableitung zwei Doppelabzweigteile (50) dienen, bei denen je zwei von vier Häuser-Regenwasserleitungen (22) direkt gegenüberliegend unter einer mit dem Deckel (13) verschließbaren Revisionsöffnung aufeinander treffen.

3. Verfahren nach Anspruch 2, **dadurch gekennzeichnet, dass** die Doppelabzweigteile (50) als, vorzugsweise aus Kunststoff, vorgefertigte Teile in die Hauptleitung (12) eingefügt sind.

4. Verfahren nach Anspruch 2, **dadurch gekennzeichnet, dass** die Doppelabzweigteile (50) als, vorzugsweise aus Kunststoff, vorgefertigte Teile auf eine Öffnung in der Hauptleitung (12) aufgesetzt sind.

5. Verfahren nach Anspruch 1, **dadurch gekennzeichnet, dass** zur Überleitung der Schmutzwasserleitungen (24) in die Hauptleitung (14) zwei Doppelabzweigteile (52) dienen, bei denen je zwei von vier Häuser-Schmutzwasserleitungen (24) direkt gegenüberliegend unter einer mit einem Deckel (15) verschließbaren Revisionsöffnung aufeinander treffen, nachdem mittels eines Krümmers (54) eine Umlenkung der Zuströme aus den Schmutzwasserleitungen (24) in Richtung der Hauptleitung (14) erfolgt ist.

6. Verfahren nach Anspruch 4 oder 5, **dadurch gekennzeichnet, dass** sowohl die Zuleitungen (22, 24) als auch die Hauptleitungen (12, 14) im Schacht (10) untereinander mittels an sich bekannter Schiebemuffen (54) in Verbindung stehen, die sich auf ihre angrenzenden, geraden Rohrleitungsteile (14, 24, 54) zurückschieben lassen, um alle Zu- und Abgänge im Schacht (10) freizulegen oder einen Austausch defekter Teile zuzulassen.

7. Verfahren nach einem der vorhergehenden Ansprüche, dadurch gekenzeichnet, dass die einseitig nahe nur einer Grenze zwischen öffentlichem (5) und an zuschliessendem nichtöffentlichen Bereich (G, H) unter nur einem Gehsteig verlegten Zu- und Ableitungen (12, 14, 16, 18, 20) von Schacht zu Schacht (10) geführt sind, wobei die Schächte verschließbar und bei geöffnetem Deckel (21) über eine fest montierte Einstiegleiter mit Einstieghilfe (31) vollständig begehbar sind und der Deckel (21) zu zwei Drittel dem Einstieg und einem Drittel für den Kabelfach dient.

## Claims

1. Method for connecting a public distribution manhole with a nonpublic domestic private junction, having the following features:
a. all feeding pipes leading into and all offtakes (12, 14, 16, 18, 20) leading out of said distribution manhole which are provided for sewage (12, 14), for water supply (16) or district heating (18) and for electric power supply and telecommunications (20) are placed near only one border between the public area (S) and the nonpublic area (G, H) to be connected therewith, advantageously under a pavement, trough prefabricated distribution and inspection manholes (10) accessible from the upper end, the distance between them being such that each of said manholes (10) may be used for disposal and supply of up to four buildings (H),
b. all feeding pipes and offtakes (12, 14, 16, 18, 20) are prepared in the nonpublic area (G) as empty tubes,
c. on the side of the road opposite to the series of distribution manholes (10) and at the border between the public area (S) and the nonpublic area (G) an angular domestic junction plate (11) is arranged trough which all feeding pipes and offtakes (12, 14, 16, 18, 20) are led,
**characterized in that**
d. all offtake pipes for rainwater, sewage water or mixed liquor flowing from the buildings (H) trough opposed feeding pipes (22, 24) are fed into a main conduit (12, 14) such that above a central inlet in a junction part (50, 52) a lock-up lid (13, 15) is arranged and that from the underneath lying opening both the main conduits (12, 14) as well as the feeding pipes (22, 24) may be inspected without the need of providing further inspection manholes, in particular in the nonpublic area (G).

2. Method according to claim 1, **characterized in that** two double branch parts (50) are provided connecting the rainwater pipes (22) with the main conduit (12) which is used to discharge the rainwater, wherein every two of four rainwater pipes (22) of a building (H) are opposing each other under an inspection port to be closed by said lid (13).

3. Method according to claim 2, **characterized in that** in the main conduit (12) said double branch parts (50) are inserted as prefabricated parts, preferably of synthetic material.

4. Method according to claim 2, **characterized in that** onto a port of the main conduit (12) said double branch parts (50) are positioned as prefabricated parts, preferably of synthetic material.

5. Method according to claim 1, **characterized in that** two double branch parts (52) are provided connecting the sewage water pipes (24) with the main conduit (14) wherein every two of four sewage water pipes (24) of a building (H) are opposing each other under an inspection port to be closed by a lid (15) after the flow deviation trough an elbow (54) from the sewage water pipes (24) into the main conduit (14).

6. Method according to claim 4 or 5, **characterized in that** the feeding pipes (22, 24) as well as the main conduits (12, 14) are interconnected in the manhole (10) by means of known sliding sleeves (54) retractable onto the adjacent straight tube parts (14, 24, 54) such that all feedings and offtakes within the manhole (10) may be opened or defective parts may be substituted.

7. Method according to any of the preceding claims, **characterized in that** the feeding pipes and offtakes (12, 14, 16, 18, 20) placed under a pavement near only one border between the public area (S) and the nonpublic area (G, H) to be connected therewith are led from one manhole (10) to the next one, said manholes (10) being adapted to be closed whereas they are totally accessible trough an opened entrance and fixed steps, wherein two third of said lid (21) serves as entrance and one third as a joint box.

## Revendications

1. Procédé pour raccorder un puits de conduites publiques avec un branchement d'immeuble privé, **caractérisé par** les faits suivants :
a. toutes les conduites d'alimentation débouchant dans le puits et toutes les conduites en sortant (12, 14, 16, 18, 20) pour les eaux usées (12, 14), pour l'alimentation en eau fraîche (16) ou pour le chauffage à distance (18) ainsi que pour l'alimentation en électricité et pour la télécommunication (20) sont amenées au voisinage d'une limite entre un domaine public (S) et un domaine touchant non public (G, H), de préférence sous un trottoir, à travers des puits de révision et de dérivation (10) préfabriqués et accessibles par le haut, la distance entre eux étant choisie de sorte que chaque puits de révision et de dérivation (10) soit apte à alimenter et à libérer jusqu'à quatre immeubles (H),
b. toutes les conduites d'alimentation et de sortie (12, 14, 16, 18, 20) sont préparées dans le domaine non public (G) par des conduites vides préinstallées,
c. sur le côté de la rue opposé à la rangée de puits (10), on dispose une plaque angulaire (11) de raccordement aux immeubles à la limite entre le domaine public (S) et le domaine non public (G), à travers laquelle passent toutes les conduites d'alimentation et de sortie (12, 14, 16, 18,20),
**caractérisé par le fait que**
d. toutes les conduites de pluie, d'eau usée ou d'un mélange des deux, sortant des immeubles (H), débouchent par des conduites opposées (22, 24) dans une conduite principale (12, 14) sous une ouverture centrale munie d'un couvercle verrouillable faisant partie d'un ensemble de confluence (50, 52), ouverture par laquelle on peut contrôler ou réviser aussi bien les conduites principales (12, 14) que les conduites d'alimentation (22, 24) sans avoir besoin de puits de révision supplémentaires dans le domaine non public (G)

2. Procédé selon la revendication 1 **caractérisé par le fait que** l'on prévoit deux éléments jumeaux de dérivation (50) pour raccorder les conduites d'eau de pluie (22) dans la conduite principale (12) de sorte que deux conduites d'eau de pluie des immeubles sur quatre conduites (22) débouchent de chaque côté sous une ouverture de révision fermée par un couvercle verrouillable (13).

3. Procédé selon la revendication 2 **caractérisé par le fait que** les éléments jumeaux de dérivation (50) sont insérés dans la conduite principale (12) en tant qu'éléments préfabriqués, de préférence en matière plastique.

4. Procédé selon la revendication 2 **caractérisé par le fait que** les éléments jumeaux de dérivation (50) sont montés sur une ouverture de la conduite principale (12) en tant qu'éléments préfabriqués, de préférence en matière plastique.

5. Procédé selon la revendication 1 **caractérisé par le fait que** l'on prévoit deux éléments jumeaux de dérivation (52) pour raccorder les conduites d'eau usée (24) dans la conduite principale (14) de sorte que deux conduites d'eau usée sur quatre (24) débouchent de chaque côté sous une ouverture de révision fermée par un couvercle verrouillable (15) au moyen d'un raccord coudé (54) déviant le flux de la conduite d'eau usée (24) dans la conduite principale (14).

6. Procédé selon la revendication 4 ou 5 **caractérisé par le fait que** les conduites d'alimentation (22, 24) et la conduite principale (12, 14) superposées dans le puits (10) sont reliées les unes aux autres par des manchons coulissants (54) aptes à être repoussés sur la partie rectiligne de la conduite (14, 24, 54) pour dégager toutes les entrées et sorties dans le puits ou pour permettre une remplacement de parties défectueuses.

7. Procédé selon une des revendications précédentes **caractérisé par le fait que** les conduites d'alimentation et de sortie (12, 14, 16, 18, 20) installées sous un trottoir au voisinage d'une des limites entre le domaine public (S) et le domaine non public (G, H) sont raccordées d'un puits à l'autre (10), les puits étant aptes à être fermés par des couvercles verrouillables, le puits une fois ouvert étant accessible par une échelle fixe munie d'un garde-fou (31), ledit couvercle (21) étant prévu aux deux tiers pour la visite et un tiers pour le passage de câbles.
